# EUROPEAN PATENT APPLICATION

(11) **EP 1 775 730 A2**
(43) Date of publication of application: **18.04.2007**
(21) Application number: 06255316.9
(22) Date of filing: 16.10.2006
(51) Int. Cl.: G11B 27/32

(54) **Management data double-side unified recording function and recording/reproducing device provided with the same**

(30) Priority: 17.10.2005 JP 2005301265
(71) Applicant: ORION ELECTRIC CO., Ltd., Fukui 915-8555 (JP)
(72) Inventor: Hayashi, Hirotaka c/o Intellectual Property Dept., Echizen-city Fukui 915-85555 (JP)
(74) Representative: Paget, Hugh Charles Edward

(57) **Abstract**

A recording/reproducing device which records management data unifying front and back sides is provided. A management data input/output processing section (51) reads data from a front side of an inserted recording medium (2), a management data creation section (52) creates management data on the front side and temporarily stores it in a memory section (6). After prompting the user to turn over the recording medium (2), the device checks the turnover of the disk, and reads data on the back side and creates management data. The management data creation section creates unified management data which unifies the management data on the both sides and the unified management data is wrote onto the back side of the recording medium. When writing is completed, the device prompts the user to turn over the recording medium and records, upon recognizing that it is the front side, the unified management data onto the front side.

## Description

### BACKGROUND OF THE INVENTION

### Field of the Invention

The present invention relates to a recording/reproducing device which records/reproduces using a disk-shaped double-side recordable recording medium represented by an optical disk, and more particularly, to a recording/reproducing device capable of recording not only management data onto an audio/visual side but also management data on the opposite side.

### Description of the Related Art

Conventionally, in a recording/reproducing device using a disk-shaped double-side recordable recording medium, there are methods and structures for recording management data indicating a summary of data recorded on a recording surface of the medium, into the recording medium.

For example, Japanese Patent Laid-Open Publication No. 2001-67841 (Patent Document 1) discloses a method of recording onto front and back recording sides of an optical disk, identification information for identifying single-side recording or double-side recording and reproducing order information indicating which side should be reproduced first in the case of double-side recording, reading such information using a recording/reproducing device during reproduction, informing a user whether or not recording is double-side recording and informing the user of the current reproducing side in the case of double-side recording and whether or not data is on the back side during reproduction from the front side.

Furthermore, Japanese Patent Laid-Open Publication No. 10-269687 (Patent Document 2) discloses a structure whereby two pickup sections are arranged so as to sandwich an optical disk for simultaneously reading management data from both sides of a double-side reproducible optical disk inserted using the two pickup sections, reading data from a recording surface to be reproduced first and reproducing the data.

However, according to the method described in Patent Document 1, it is possible to check, when a double-side reproducible optical disk is inserted, the presence/absence of data on a data readable side and data on the opposite side, but it is not possible to know contents of the data and the disk must be ejected and turned over to know the contents of the data.

On the other hand, according to the method described in Patent Document 2, it is possible to read data on both sides of a double-side reproducible optical disk without any special operations, but the entire device becomes complicated and enormous, resulting in high cost.

### SUMMARY OF THE INVENTION

The present invention has been made in view of the above described problems and it is an object of the present invention to provide a low-cost management data double-side unified recording function for a double-side recordable disk-shaped recording medium for creating management data allowing a user to judge the presence/absence of data and approximate contents on both sides of the recording medium without ejecting the recording medium and a recording/reproducing device provided therewith.

The management data double-side unified recording function according to a first aspect of the present invention is characterized by a recording/reproducing device provided with recording and reproducing means for a disk-shaped recording medium, management data input means for reading management data recorded into the recording medium, management data output means for writing the management data into the recording medium, management data creation means for creating the management data based on data recorded into the recording medium and storage means for temporarily storing the management data created by the management data creation means, wherein management data on the front side of the recording medium is created by the management data input means, the management data is stored in the storage means, management data is created on the back side of the recording medium which is ejected and turned over, the management data is stored in the storage means, the management data is thereby stored as management data which unifies the management data on the front side and back side of the recording medium in the storage means, the unified management data is recorded onto the back side of the recording medium, the recording medium is ejected and turned over again and the unified management data is recorded onto the front side of the recording medium.

According to the configuration of aspect 1, it is possible to record unified management data onto both the front side and back side by reading the management data on one side (hereinafter referred to as "front side") of the double-side recordable disk-shaped recording medium, creating management data using the management data creation means, temporarily storing the management data on the front side created by the storage means, then turning over the recording medium, creating management data on the other side (hereinafter referred to as "back side") of the recording medium using the management data creation means, storing the management data on the back side likewise created by the storage means, recording the management data which unifies the management data on the front side and back side onto the back side, turning over the recording medium again and recording the unified management data onto the front side.

The management data double-side unified recording function according to a second aspect of the present invention is the management data double-side unified recording function according to aspect 1, characterized in that the management data creation means includes selection means for a user to accept or reject information on a plurality of types of recorded data when creating management data on the back side.

According to the configuration of aspect 2, the user can select desired information from a plurality of items of recorded information making up the management data on the back side.

The recording/reproducing device according to a third aspect of the present invention is provided with the management data double-side unified recording function according to aspect 1 or 2.

According to the configuration of aspect 3, the recording/reproducing device can use the management data double-side unified recording function according to aspect 1 or 2 when creating management data.

The management data double-side unified recording function according to the first aspect is for a recording/reproducing device provided with recording and reproducing means for a disk-shaped recording medium, management data input means for reading management data recorded into the recording medium, management data output means for writing the management data into the recording medium, management data creation means for creating the management data based on data recorded into the recording medium and storage means for temporarily storing the management data created by the management data creation means, wherein management data on the front side of the recording medium is created by the management data input means, the management data is stored in the storage means, management data is created on the back side of the recording medium which is ejected and turned over, the management data is stored in the storage means, the management data is thereby stored as management data which unifies the management data on the front side and back side of the recording medium in the storage means, the unified management data is recorded onto the back side of the recording medium, the recording medium is ejected and turned over again and the unified management data is recorded onto the front side of the recording medium, and therefore the recording medium for which the management data has been created using this function allows the user to view information recorded on the back side even when viewing, for example, the management data on the front side of the recording medium without inserting or ejecting the recording medium, which improves convenience for the user.

The management data double-side unified recording function according to the second aspect is the management data double-side unified recording function according to aspect 1, wherein the management data creation means includes selection means for a user to accept or reject information on a plurality of types of recorded data when creating management data on the back side, and therefore the user can select desired information from a plurality of items of information making up the management data recorded on the back side and thereby record only necessary information as the management data.

The recording/reproducing device according to the third aspect is provided with the management data double-side unified recording function according to aspect 1 or 2, and therefore when creating management data of the recording medium, it is possible to record management data on the back side onto the front side and management data on the front side onto the back side together with the management data of their respective sides, it is not necessary to turn over the recording medium when viewing the management data of this recording medium and when, for example, the user checks data recorded on the recording medium, the user can easily identify data recorded on the front side or back side of this recording medium by only viewing the management data of any one of the front side and back side without turning over the recording medium.

### BRIEF DESCRIPTION OF THE DRAWINGS

FIG. 1 is a block diagram showing the configuration of a recording/reproducing device according to an embodiment of the present invention;
FIG. 2 is a flow chart showing the operation of the management data double-side unified recording function according to the embodiment of the present invention;
FIG. 3 is a diagram illustrating an index created using the management data double-side unified recording function according to the embodiment of the present invention; and
FIG. 4 is a diagram illustrating information on the index on the back side created using the management data double-side unified recording function according to the embodiment of the present invention.

### DETAILED DESCRIPTION OF THE PREFERRED EMBODIMENTS

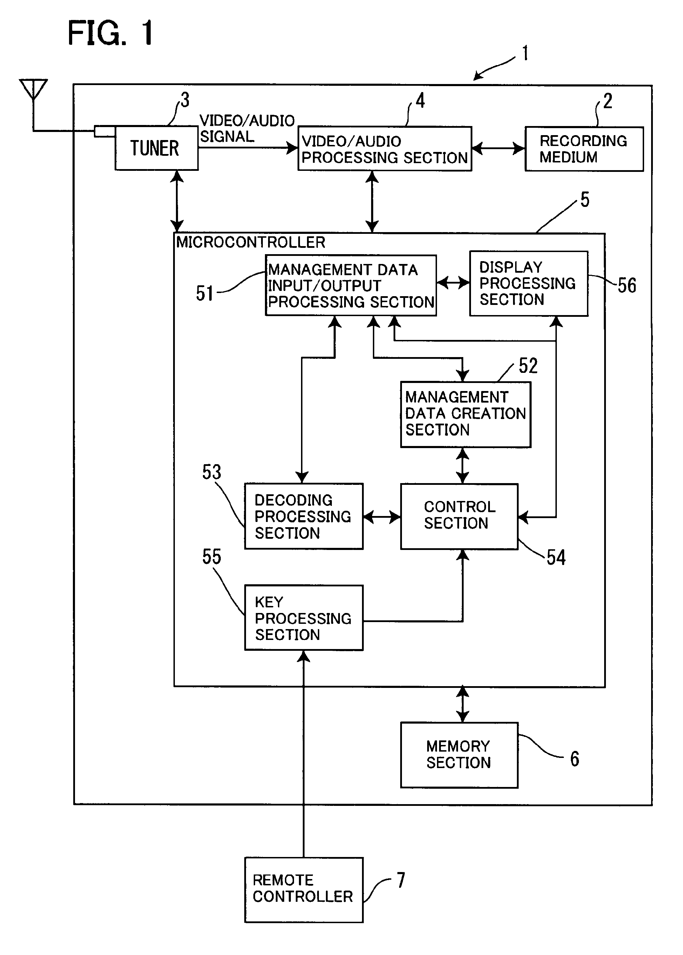

Hereinafter, embodiments as the best modes of implementing the present invention will be explained with reference to FIG. 1 to FIG. 4. It goes without saying that the present invention is also easily applicable to cases other than those explained in the embodiments within a range without departing from the essence of the present invention.

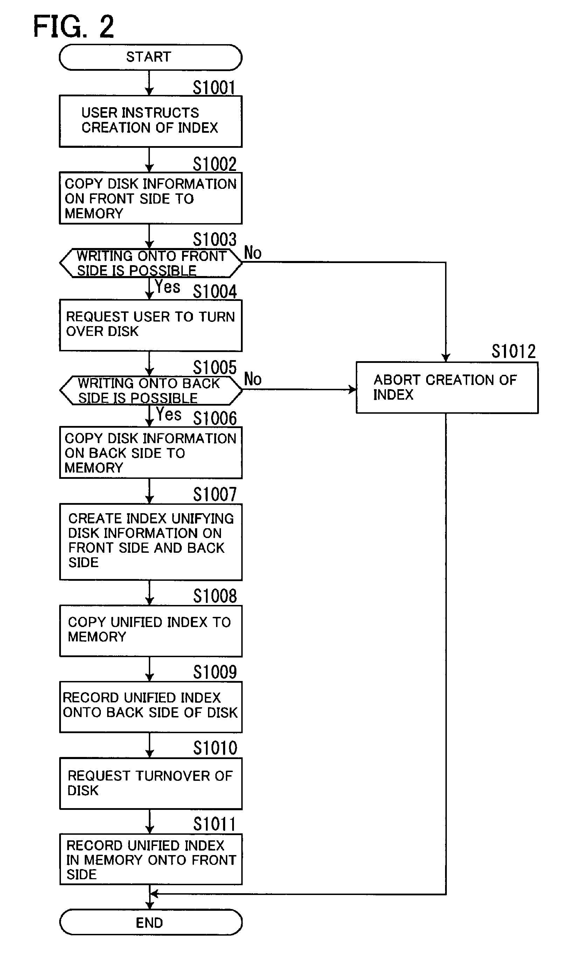

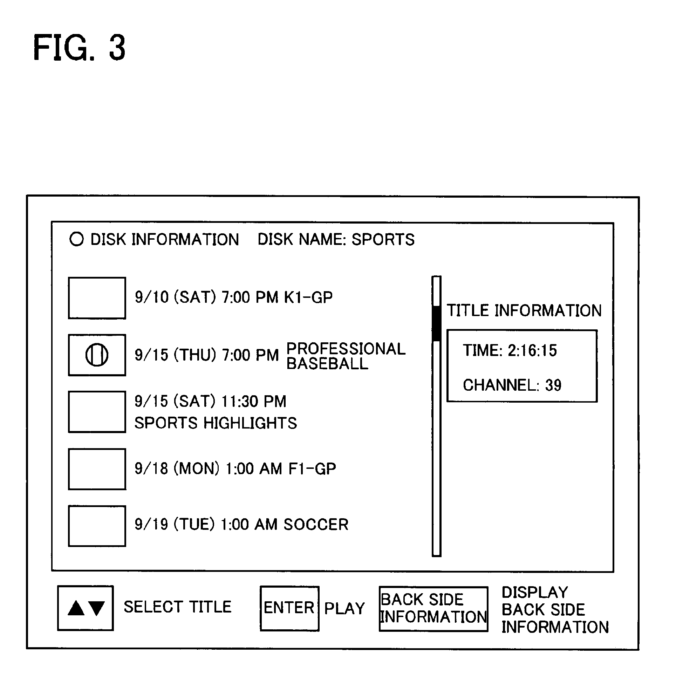

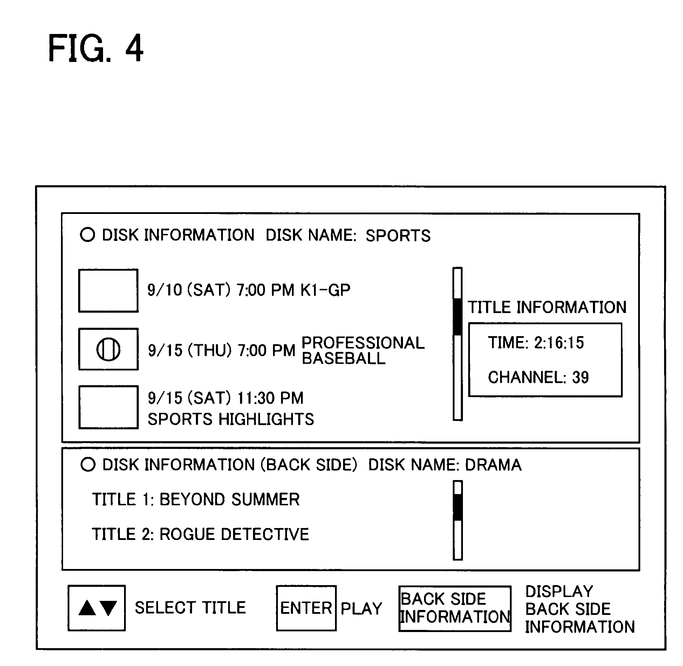

FIG. 1 to FIG. 4 show an embodiment of the present invention and FIG. 1 is a block diagram showing the configuration of a recording/reproducing device according to this embodiment. FIG. 2 is a flow chart showing the operation when creating an index which is management data of the recording/reproducing device and FIG. 3 and FIG. 4 illustrate a method of using the index created.

The structure of the recording/reproducing device according to this embodiment will be explained based on FIG. 1. Reference numeral 1 denotes a recording/reproducing device. Reference numeral 2 denotes a double-side recordable disk-shaped recording medium. Reference numeral 3 denotes a tuner which receives broadcast radio wave obtained through an antenna (not shown) or the like at the recording/reproducing device. Reference numeral 4 denotes a video/audio processing section for processing video/audio signals sent from the recording medium 2 or tuner 3 for displaying the video/audio on a display section or display device (not shown). Reference numeral 5 denotes a microcontroller which controls the operation of the recording/reproducing device 1 and is constructed of a management data input/output processing section 51 which reads and writes management data recorded in the recording medium 2, a management data creation section 52 which creates an index to be recorded in the recording medium, a decoding processing section 53 which decodes the management data acquired by the management data input/output processing section 51, a control section 54 which controls each processing section of the microcontroller 5 and a key processing section 55 which is selection means for processing operation signals from operation means or a remote controller (not shown) or the like. Reference numeral 6 denotes a memory section, which is used to temporarily save data when management data is read or created. The memory section 6 may also use a memory area (not shown) provided inside the microcontroller 5. Reference numeral 7 denotes a remote controller, which is operation means for the user to operate the recording/reproducing device 1 through the key processing section 55. The above described management data is data for judging approximate contents of data recorded in the recording medium, used as a so-called index and the contents thereof include a disk name, the number of recorded titles, title (program) name, recording date and time, the number of files, file size, type of format or the like and it is possible to select desired items from among a plurality of these items of information using the key processing section 55 as appropriate.

Next, the operating procedure when creating an index of the recording/reproducing device 1 will be explained based on FIG. 2. The user instructs the recording/reproducing device 1 to create an index (S1001). Hereinafter, suppose the side of the disk which is the recording medium 2 from which data is being read at this time is a front side and the opposite side is a back side. Disk information on the front side is copied to the memory 6 (S1002). At this time, it is judged whether or not the front side of the recording medium 2 is writable (S1003). When writing is not possible, the creation of an index is aborted. When writing is possible, the user is requested to eject and turn over the disk to acquire information on the back side of the recording medium 2 (S1004). When the ejection and turnover of the recording medium 2 is confirmed, it is judged whether or not writing on the back side is possible (S1005). When writing is not possible, the creation of an index is aborted (S1012). When writing is possible, the disk information on the back side is copied to the memory 6 (S1006). An index that unifies the disk information on the front side and back side stored in the memory 6 is created by the management data creation section 52 (S1007). The unified index is copied to the memory 6 (S1008). The unified index is written onto the back side (S1009). The user is requested to turn over the recording medium 2 to prepare for writing data onto the front side (S1010). When preparation for writing data onto the front side of the disk is completed, the unified index in the memory 6 is written onto the front side (S1011). This completes preparation for the creation of the disk in which an index unifying one side and the other side is recorded on the front and back sides.

An example of creation of the unified index on the front and back sides will be explained based on FIG. 3 and FIG. 4. FIG. 3 illustrates the screen of the display section or display device which displays the index which is management data created by the recording/reproducing device 1 in this embodiment. As the information, a disk name, broadcasting date and time of a recorded broadcast program, program title, video showing one scene of the program, broadcasting time and channel. A broadcast program is reproduced by using the remote controller 7 or the like of the recording/reproducing device 1 to operate this list of broadcast programs and pressing "Enter." When a specific key of the remote controller 7 (not shown) is pressed, the back side information is displayed superimposed on the display space of the front side information as shown in FIG. 4. The disk name and program title are displayed as the back side information. However, since it is the information on the back side, it cannot be reproduced by selecting it with a cursor and pressing "Enter."

The above described recording/reproducing device 1, creates management data which unifies the front side and back side and records the management data onto both sides, allows the user to view the management data on the back side without turning over the disk while an index on the front side is displayed, for example, and can thereby save time and trouble of turning over the disk and improve convenience.

An embodiment of the present invention has been described in detail so far, but the present invention is not limited to the above described embodiment and can be modified in various ways within a range not departing from the essence of the present invention. For example, the embodiment assumes the case where a disk name and program title are displayed as the back side information, but the present invention is not limited to this and there will be no problem even when the present invention is adapted in such a way that the user can select desired display items and more detailed information is displayed.

## Claims

1. A management data double-side unified recording function of a recording/reproducing device **characterized by** comprising:
recording and reproducing means for a disk-shaped recording medium;
management data input means for reading management data recorded into the recording medium;
management data output means for writing the management data into the recording medium;
management data creation means for creating the management data based on data recorded into the recording medium; and
storage means for temporarily storing the management data created by the management data creation means,
wherein management data on the front side of the recording medium is created by the management data input means, the management data is stored in the storage means, management data is created on the back side of the recording medium which is ejected and turned over, the management data is stored in the storage means, the management data is thereby stored as management data which unifies the management data on the front side and back side of the recording medium in the storage means, the unified management data is recorded onto the back side of the recording medium, the recording medium is ejected and turned over again and the unified management data is recorded onto the front side of the recording medium.

2. The management data double-side unified recording function according to claim 1, **characterized in that** the management data creation means comprises selection means for a user to accept or reject information on a plurality of types of recorded data when creating management data on the back side.

3. A recording/reproducing device, **characterized by** comprising the management data double-side unified recording function according to claim 1 or 2.
